# EUROPEAN PATENT APPLICATION

(11) **EP 4 398 647 A1**
(43) Date of publication of application: **10.07.2024**
(21) Application number: 23219176.7
(22) Date of filing: 21.12.2023
(51) Int. Cl.: H04W 48/16, H04W 48/18

(54) **METHOD AND APPARATUS FOR ENHANCEMENTS ON AUTOMATIC STAND-ALONE NON-PUBLIC NETWORK SELECTION FOR SUPPORTING LOCALIZED SERVICES**

(30) Priority: 05.01.2023 US 202363478516 P; 13.12.2023 US 202318539205
(71) Applicant: MediaTek Inc., Hsin-Chu 300 (TW)
(72) Inventor: LAI, Chia-Lin, 30078 Hsinchu City (TW); LIN, Yuan-Chieh, 30078 Hsinchu City (TW)
(74) Representative: Hoefer & Partner Patentanwälte mbB

(57) **Abstract**

Various solutions for enhancements on automatic stand-alone non-public network (SNPN) selection for supporting localized services are described. An apparatus may determine whether it supports accessing an SNPN providing access for localized services and a user enables to access localized services. Responsive to determining that it supports accessing an SNPN providing access for localized services and the user enables to access localized services, the apparatus may select an available SNPN with validity information in an event that both the apparatus and the selected available SNPN support access using credentials from a credentials holder (CH) and the validity information is met, and then attempt a registration on the selected SNPN.

## Description

### Field of the Invention

The present invention is generally related to mobile communications and, more particularly, to enhancements on automatic stand-alone non-public network (SNPN) selection for supporting localized services.

### Background of the Invention

Unless otherwise indicated herein, approaches described in this section are not prior art to the claims listed below and are not admitted as prior art by inclusion in this section.

A public land mobile network (PLMN) is a network established and operated by an administration or recognized operating agency (ROA) for the specific purpose of providing land mobile communication services to the public. PLMN provides communication possibilities for mobile users. A PLMN may provide service in one or a combination of frequency bands. Access to PLMN services is achieved by means of an air interface involving radio communications between mobile phones and base stations with integrated IP network services. One PLMN may include multiple radio access networks (RANs) utilizing different radio access technologies (RATs) for accessing mobile services. RAN is part of a mobile communication system, which implements a radio access technology. Conceptually, RAN resides between a mobile device and provides connection with its core network (CN). Depending on the (3rd Generation Partnership Project (3GPP)) standards, mobile phones and other wireless connected devices are varyingly known as user equipment (UE), terminal equipment (TE), mobile stations (MS), or mobile termination (MT), etc. Examples of different RATs include 2nd generation (2G) Global System for Mobile Communications (GSM), 3rd generation (3G) Universal Mobile Telecommunications System (UMTS), 4th generation (4G) Long Term Evolution (LTE), 5th generation (5G) New Radio (NR), and other non-3GPP access RAT including Wireless Fidelity (Wi-Fi).

As compared to PLMN, a non-public network (NPN) is a network for non-public use. An NPN is either a stand-alone NPN (SNPN), i.e., operated by an NPN operator and not relying on network functions provided by a PLMN, or a public network integrated NPN (PNI-NPN), i.e., an NPN deployed with the support of a PLMN. A Credentials Holder (CH) may authenticate and authorize access to an SNPN separate from the CH. The combination of a PLMN ID and Network identifier (NID) identifies an SNPN. A LTE may be enabled for SNPN.

Local or localized services are services that are provided locally (e.g., at specific/limited area and/or are bounded in time). A localized service provider is an application provider or a network operator who make their services localized and to be offered to end user via a hosting network (e.g., an SNPN or a PNI-NPN). A hosting network is a network that provides (access for) localized services, while a home network is a network owning the currently in-use subscription or credential of the UE. End user can enable or disable to access localized services. If the end user disables to access localized services, the UE (i.e., MS) may not access an (S)NPN providing access for localized services.

In 3GPP Release 18, it is agreed that the standards for 5G NR will support localized services, but details of how the 3GPP standards should be adapted with respect to LTE operations are unclear and still under discussion. For example, a UE should be able to access an SNPN as hosting network for localized services (i.e., an SNPN providing access for localized services). However, current automatic SNPN selection in 3GPP standards does not define how UE can access an SNPN providing access for localized services. Therefore, there is a need to provide proper schemes to solve this issue.

### Summary of the Invention

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present invention is to propose solutions or schemes that address the aforementioned issue pertaining to unclear UE operations in automatic SNPN selection for supporting localized services.

In one aspect, a method may involve an apparatus determining whether it supports accessing an SNPN providing access for localized services and a user enables to access localized services. The method may also involve the apparatus, responsive to determining that the apparatus supports accessing an SNPN providing access for localized services and the user enables to access localized services, performing operations comprising: selecting an available SNPN with validity information (e.g., from LTE configuration and subscription information provided by the home network, such as a subscribed SNPN, a PLMN, or a CH) in an event that both the apparatus and the selected SNPN support access using credentials from a CH and the validity information is met; and attempting a registration on the selected SNPN.

In one aspect, an apparatus may comprise a transceiver which, during operation, wirelessly communicates with one or more SNPNs. The apparatus may also comprise a processor communicatively coupled to the transceiver. The processor, during operation, may perform operations comprising determining whether the apparatus supports accessing an SNPN providing access for localized services and a user enables to access localized services. The processor, responsive to determining that the apparatus supports accessing an SNPN providing access for localized services and the user enables to access localized services, may also perform operations comprising: selecting an available SNPN with validity information (e.g., from LTE configuration and subscription information provided by the home network of the UE, such as a subscribed SNPN, a PLMN, or a CH) in an event that both the apparatus and the selected available SNPN support access using credentials from a CH and the validity information is met; and attempting, via the transceiver, a registration on the selected SNPN.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-IoT), Industrial Internet of Things (IIoT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present invention is not limited to the examples described herein.

### Brief Description of the Drawings

The accompanying drawings are included to provide a further understanding of the invention and are incorporated in and constitute a part of the present invention. The drawings illustrate implementations of the invention and, together with the description, serve to explain the principles of the invention. It is appreciable that the drawings are not necessarily in scale as some components may be shown to be out of proportion than the size in actual implementation in order to clearly illustrate the concept of the present invention.
FIG. 1 is a diagram depicting an example scenario of a communication system providing access for localized services in accordance with implementations of the present invention.
FIG. 2 is a diagram depicting two example scenarios of a 5G system (5GS) architecture with access to an SNPN using credentials from a CH.
FIG. 3 is a diagram depicting an example scenario of SNPN subscription data/configuration with validity information in accordance with an implementation of the present invention.
FIG. 4 is a diagram depicting another example scenario of SNPN subscription data/configuration with validity information in accordance with an implementation of the present invention.
FIG. 5 is a diagram depicting an example scenario of a UE accessing localized services via an SNPN providing access for localized services in accordance with an implementation of the present invention.
FIG. 6 is a diagram depicting another example scenario of a UE accessing localized services via an SNPN providing access for localized services in accordance with an implementation of the present invention.
FIG. 7 is a block diagram of an example communication system in accordance with an implementation of the present invention.
FIG. 8 is a flowchart of an example process in accordance with an implementation of the present invention.

### Detailed Description

Detailed embodiments and implementations of the claimed subject matters are disclosed herein. However, it shall be understood that the disclosed embodiments and implementations are merely illustrative of the claimed subject matters which may be embodied in various forms. The present invention may, however, be embodied in many different forms and should not be construed as limited to the exemplary embodiments and implementations set forth herein. Rather, these exemplary embodiments and implementations are provided so that description of the present invention is thorough and complete and will fully convey the scope of the present invention to those skilled in the art. In the description below, details of well-known features and techniques may be omitted to avoid unnecessarily obscuring the presented embodiments and implementations.

### Overview

Implementations in accordance with the present invention relate to various techniques, methods, schemes and/or solutions pertaining to enhancements on automatic SNPN selection for supporting localized services. According to the present invention, a number of possible solutions may be implemented separately or jointly. That is, although these possible solutions may be described below separately, two or more of these possible solutions may be implemented in one combination or another.

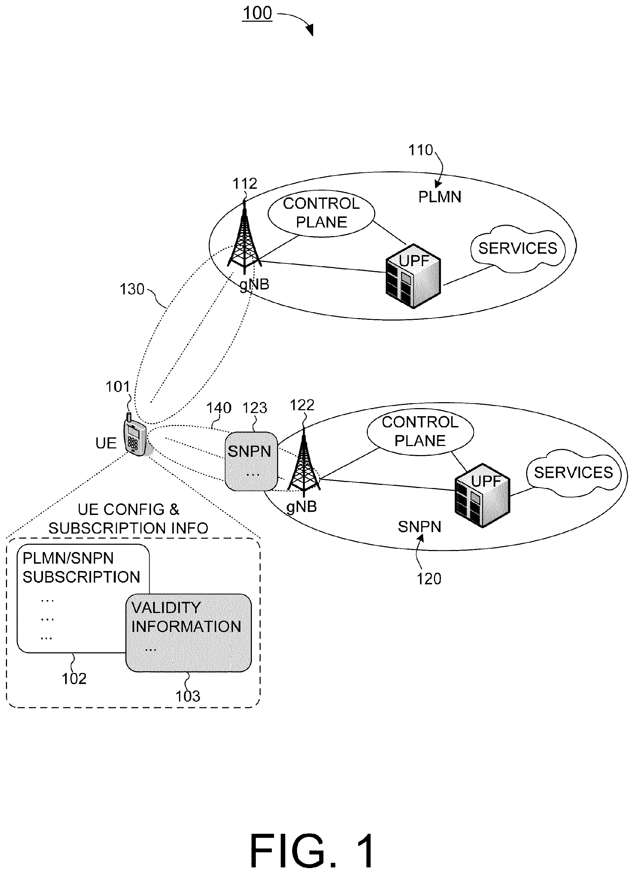

FIG. 1 illustrates an example scenario 100 of a communication system providing access for localized services in accordance with implementations of the present invention. Scenario 100 involves a communication system including a LTE 101, a PLMN 110 and an SNPN 120 providing access for localized services. The PLMN 110 may include control plane functionalities (e.g., an access and mobility management function (AMF)), user plane functionalities (e.g., a user plane function (UPF)), and applications that provide various services by communicating with a plurality of LTEs including LTE 101. A serving base station (BS) (e.g., a gNB) 112 belongs to part of the RAN 130. The RAN 130 provides radio access for the UE 101 via a RAT.

The SNPN 120 may include control plane functionalities (e.g., an AMF), user plane functionalities (e.g., a UPF), and applications that provides various services by communicating with a plurality of UEs including UE 101. The combination of a PLMN ID and NID identifies an SNPN. A serving BS (e.g., a gNB) 122 belongs to part of the RAN 140. The RAN 140 provides radio access for the UE 101 via a RAT. An AMF in the SNPN 120 may communicate with gNB 122. The SNPN 120 may be operated by an NPN operator and does not rely on network functions provided by a public network. A CH may authenticate and authorize access to an SNPN separate from the CH. Next-generation RAN (NG-RAN) nodes which provide access to SNPNs may broadcast information 123 that includes: (i) one or multiple PLMN IDs; and (ii) a list of NIDs per PLMN ID identifying the (S)NPNs which the NG-RAN provides access to. An SNPN-enabled UE may be configured with PLMN ID and NID (i.e., configured with an SNPN ID=PLMN ID+NID) of the subscribed SNPN. An SNPN-enabled UE that supports access to an SNPN using credentials from a CH may additionally be configured with information for SNPN selection (SNPN selection information/configuration), and may perform registration using the PLMN/SNPN subscription 102 (e.g., stored in a universal subscriber identity module (USIM)) (in SNPN access mode).

Local or localized services are services that are provided locally (e.g., at specific/limited area and/or are bounded in time (e.g., specific time period(s), such as specific date(s) or specific hours of date(s)). The services may be realized via applications (e.g., live or on-demand audio/video stream, electric game, IP multimedia subsystem (IMS), etc.), or connectivity (e.g., LTE to LTE, LTE to Data Network, etc.). A localized service provider may be an application provider or a network operator who makes their services localized and to be offered to end user via a hosting network. A hosting network may be a network that provides access for localized services and can be an SNPN or a PNI-NPN, while a home network is a network owning the currently in-use subscription or credential of the UE. In scenario 100, the SNPN 120 is the hosting network providing access for localized services to the UE 101.

A LTE route selection policy (URSP) rule may include an association of the UE application and the DNN ((Data Network Name)) or network slice which is meant for a specific localized service. A URSP rule can also include "Route Selection Validity Criteria" (Time Window and/or a Location Criteria Validity Conditions) with the time/location defined for the specific localized service. The LADN (Local Access Data Network) can also be used for enabling the LTE access to localized service.

To enable the SNPN 120 to provide access to localized services, the SNPN operator may configure the network with information enabling the UEs to access the localized services according to validity information of the localized services, and the information is determined in agreement with the localized service provider. For instance, the validity information may include: (i) identification of each localized service, e.g., to be used in URSP rules; and (ii) validity criteria/restriction for each localized service, e.g., the validity of time period and/or (area of) location.

When localized services in a network are completed, all LTEs registered with the network are expected to be moved to other networks or to other cells within the same network. The other networks may each be a home PLMN (HPLMN), visited PLMN (VPLMN) or another SNPN. A UE may stop using the network resources for localized services for numerous reasons, such as (i) localized services in a network are completed; (ii) validity information of network selection information are no longer met; (iii) the user decides to stop using the localized services before they are completed (e.g., end user disables to access localized services); and (iv) a policy decision is taken by the network, with the effect that the UE is deregistered before the localized services are completed. The validity information 103 (or called validity restrictions, criteria, or conditions) is provided or configured to the LTE 101 as part of the localized service information in UE configuration and subscription information, which is used to restrict the LTE's access of an SNPN providing access for localized services.

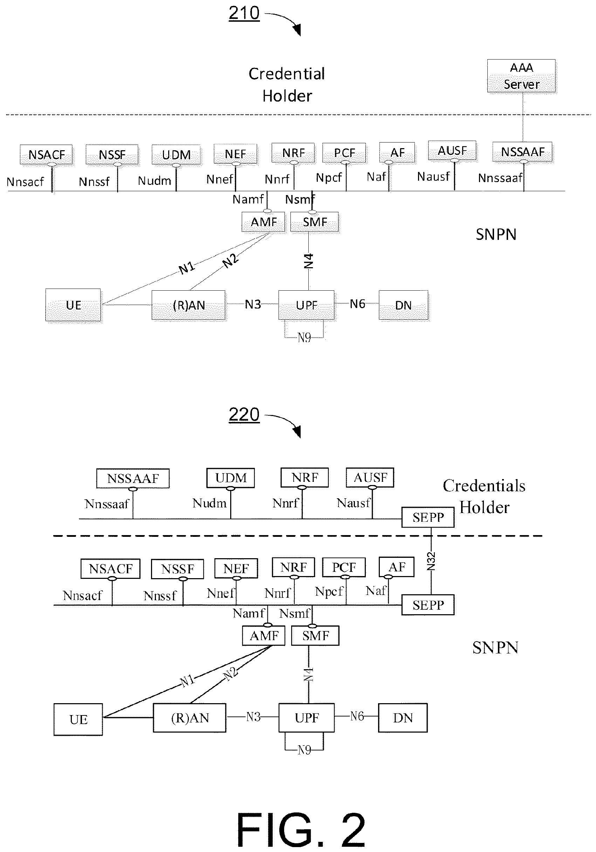

FIG. 2 illustrates two example scenarios 210 and 220 of a 5GS architecture with access to an SNPN using credentials from a CH. Scenario 210 depicts the 5GS architecture for SNPN with CH using authentication, authorization and accounting (AAA) server for primary authentication and authorization. The authentication server function (AUSF) and unified data management (UDM) in an SNPN may support primary authentication and authorization of UEs using credentials from an AAA server in a CH. The SNPN, as depicted by 210, can be the subscribed SNPN for the UE (i.e., the NG-RAN broadcasts the SNPN ID of the subscribed SNPN). As a deployment option, the SNPN, as depicted by 210, can also be another SNPN than the subscribed SNPN for the UE (i.e., none of the SNPN IDs broadcast by the NG-RAN matches the SNPN ID corresponding to the subscribed SNPN). The network slice-specific and SNPN authentication and authorization function (NSSAAF) deployed in the SNPN can support primary authentication in the SNPN using credentials from a CH using an AAA server (as depicted) and/or the NSSAAF can support NSSAAF with a network slice-specific AAA server (not depicted).

Scenario 220 depicts the 5GS architecture for SNPN with CH using AUSF and UDM for primary authentication and authorization. An SNPN may support primary authentication and authorization of UEs that use credentials from a CH using AUSF and UDM. The CH may be an SNPN or a PLMN. The CH UDM provides to SNPN the subscription data.

### SNPN as hosting network providing access for localized services

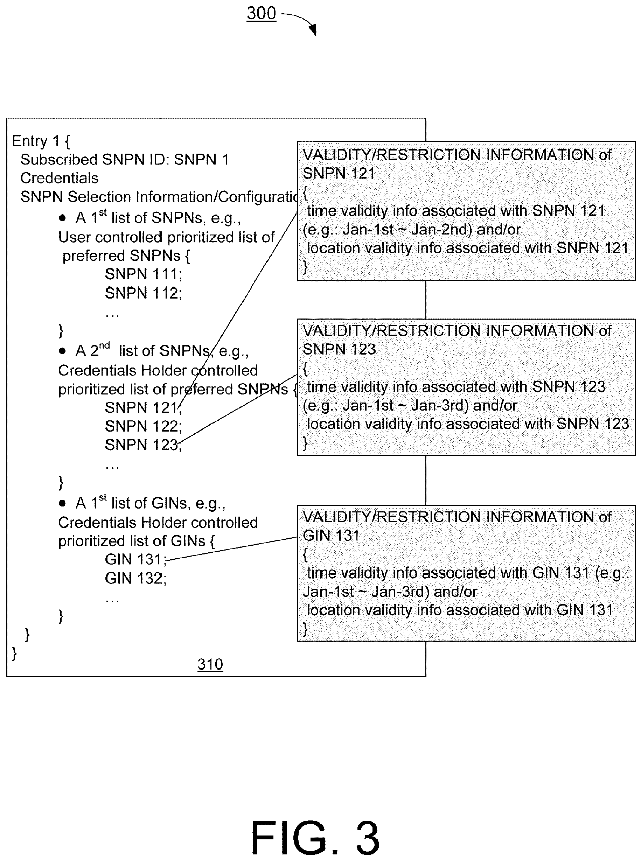

FIG. 3 illustrates an example scenario 300 of SNPN subscription data/configuration with validity information in accordance with an implementation of the present invention. Scenario 300 depicts an exemplary SNPN subscription data/configuration that an SNPN-enabled UE may be configured with for selecting and accessing an SNPN providing access for localized services. For a UE accessing an SNPN providing access for localized services using the subscription/credentials of its home network, only two cases are considered. If the home network (or CH) is a PLMN, the hosting network can be a PNI-NPN or an SNPN. If the home network (or CH) is an SNPN, the hosting network can only be an SNPN. If the LTE accesses the hosting network using subscriptions or credentials from the UE's home network, and the UE has multiple credentials or subscriptions, then the LTE may need to determine which credential or subscription to be used to access the hosting network. The validity information provided to the LTE as part of the localized service information in LTE configuration and subscription information can be used to restrict the LTE's access of an SNPN providing access for localized services. For example, the validity information may include: (time and/or location) validity information ((time and/or location:) duration, criteria, or restriction) associated with SNPN (ID) or GIN.

As depicted by 310, an SNPN-enabled LTE may be configured with the following LTE configuration and subscription information for each subscribed SNPN: (i) PLMN ID and NID (SNPN ID) of the subscribed SNPN (e.g., SNPN 1); and (ii) subscription permanent identifier (SUPI) and credentials for the subscribed SNPN. If the LTE supports access to an SNPN using credentials from a CH, then the UE may also be configured with: (iii) user-controlled prioritized list of preferred SNPNs (e.g., SNPN 111, SNPN 112); (iv) CH-controlled prioritized list of preferred SNPNs (e.g., SNPN 121, SNPN 122, SNPN 123); and (v) CH-controlled prioritized list of GINs (e.g., GIN 131, GIN 132).

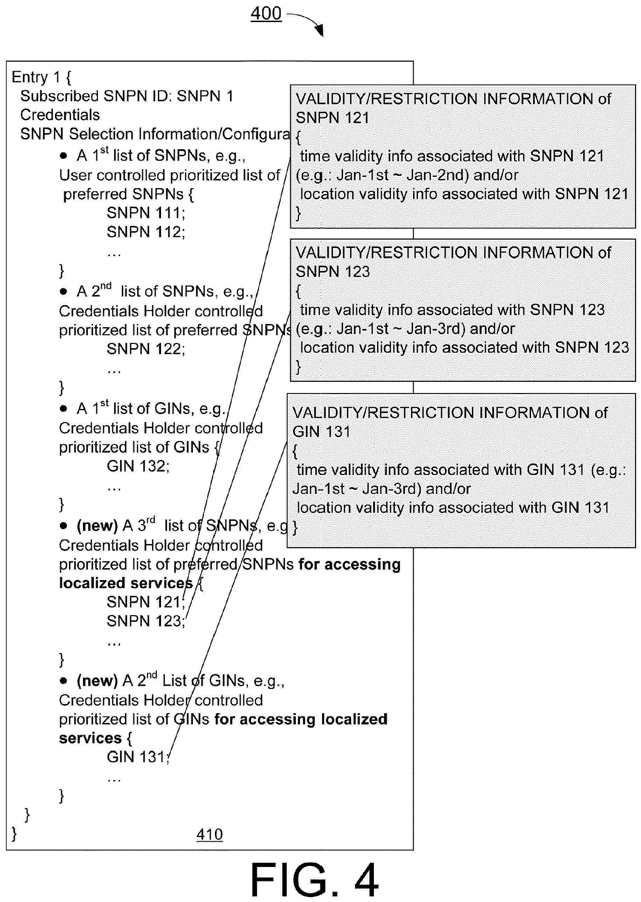

FIG. 4 illustrates an example scenario 400 of SNPN subscription data/configuration with validity information in accordance with an implementation of the present invention. Scenario 400 depicts another exemplary SNPN subscription data/configuration that an SNPN-enabled UE may be configured with for selecting and accessing an SNPN for localized services in UE configuration and subscription information. For automatic network selection, in the case of SNPN providing access for localized services, there can be associated (time (duration) and/or location (restriction)) validity information for SNPN(s) or GIN(s). In one example, as depicted by 310, the existing CH-controlled prioritized list of preferred SNPNs (and GINs) can be extended with the (time and/or location) validity information or conditions information for each entry in the list; or in another example, as depicted by 410, there can be one (or more) new list type defined to provide entries with validity information for SNPNs and GINs (i.e., to define new CH-controlled prioritized lists of preferred SNPNs/GINs for accessing localized services in UE configuration and subscription information, where each entry contains an SNPN/GIN identity and validity information).

As depicted by 310 or 410, SNPN 121 has associated time (duration/period) validity condition (the time duration/period (e.g., start and end time) in which the UE is allowed to access SNPN 121) of Jan-1st ~ Jan-2nd, SNPN 123 has associated time (duration/period) validity condition of Jan-1st ~ Jan-3rd, and GIN 131 has associated time (duration/period) validity condition of Jan-1st ~ Jan-3rd. Such time (duration/period) validity information may be provided to the LTE as part of the localized service information to restrict the LTE's access of an SNPN providing access for localized services (e.g., SNPN 123). Additionally, or optionally, the validity information may also include location validity information, which can be in the form of geolocation and/or tracking area identity (TAI)(s) or cell(s) (of serving network (serving PLMN or serving SNPN)), such that the location validity information may be used to assist the LTE to determine where to start searching for SNPNs providing access for localized services.

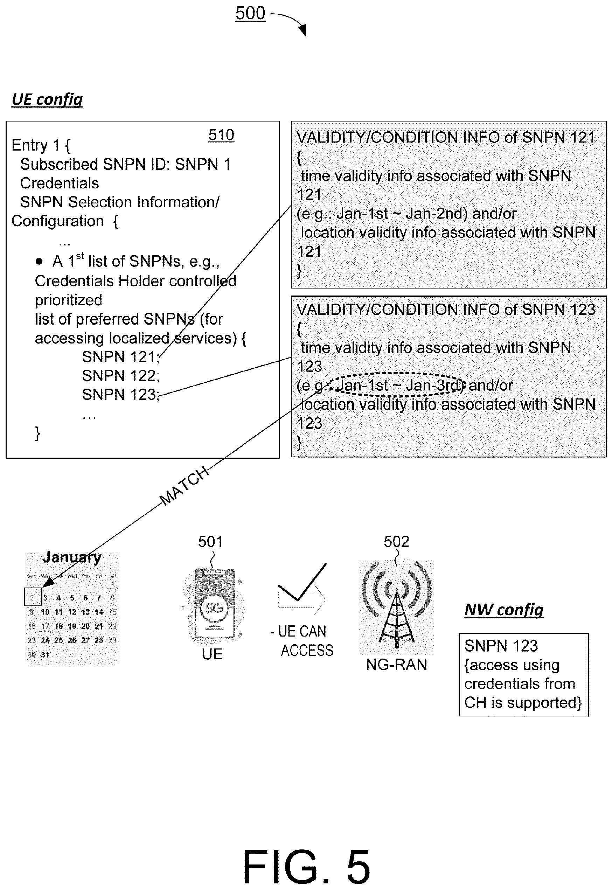

FIG. 5 illustrates an example scenario 500 of a UE accessing localized services via an SNPN providing access for localized services in accordance with an implementation of the present invention. Scenario 500 depicts the access of an SNPN-enabled LTE 501 to an SNPN providing access for localized services 502 in a time period is accepted. The UE 501 is configured with SNPN subscription 510 including: (i) the subscribed SNPN = SNPN 1; and (ii) CH-controlled prioritized list of preferred SNPNs (for accessing localized services), which includes SNPN 121, SNPN 122, and SNPN 123. Specifically, SNPN 121 is associated with time validity condition of Jan-1st ~ Jan-2nd, and SNPN 123 is associated with time validity condition of Jan-1st ~ Jan-3rd. Through 5GC/AMF and the NG-RAN 502, the hosting network broadcasts its SNPN ID == 123, with an indication that access using credentials from a CH is supported. Since the UE 501 is subscribed to SNPN 1, and SNPN 123 is included as a preferred SNPN in the entry of "list of subscriber data" for SNPN1, the UE 501 may select and attempt to access SNPN 123 using credentials from SNPN 1. That is, SNPN 123 is a localized service provider and a hosting network, while SNPN 1 is the credential holder. Since there exists a time validity condition associated with SNPN 123, the UE 501 needs to determine whether such time validity condition is met before the access to SNPN 123. The UE 501 checks the current time being January 2nd, which is inside the time period of Jan-1st ~ Jan-3rd. As a result, the UE 501 can access SNPN 123 using credentials from the subscribed SNPN 1. Additionally, or optionally, if location validity information is available, in this example we assume location validity condition is met per the location validity information.

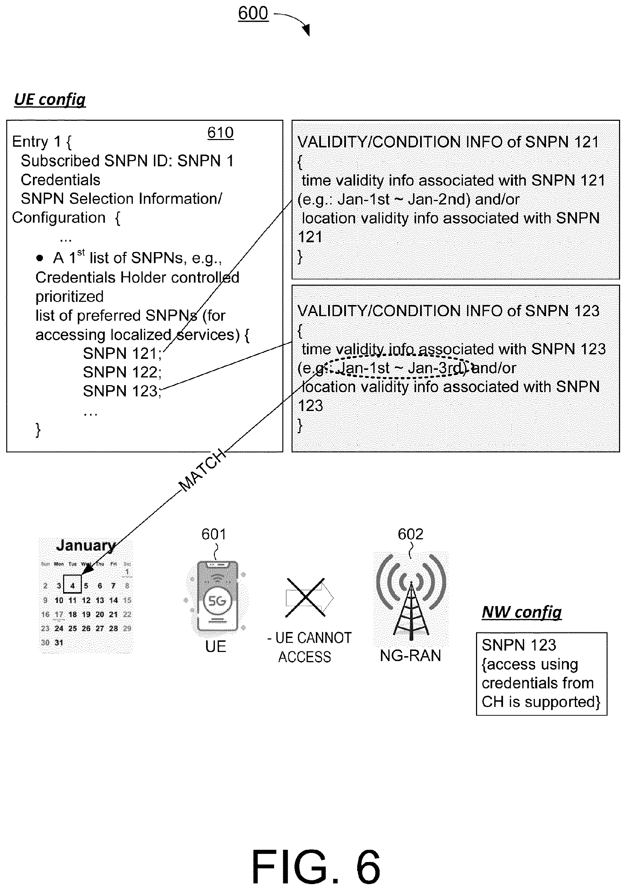

FIG. 6 illustrates an example scenario 600 of a UE accessing localized services via an SNPN providing access for localized services in accordance with an implementation of the present invention. Scenario 600 depicts the access of an SNPN-enabled LTE 601 to an SNPN (as hosting network) 602 in another time period is not allowed (i.e., if the UE tries to access, the network will reject). The UE 601 is configured with the SNPN subscription 610 including: (i) the subscribed SNPN = SNPN 1; and (ii) a CH-controlled prioritized list of preferred SNPNs, which includes SNPN 121, SNPN 122, and SNPN 123. Specifically, SNPN 121 is associated with time validity condition of Jan-1st ~ Jan-2nd, and SNPN 123 is associated with time validity condition of Jan-1st ~ Jan-3rd. Through 5GC/AMF and the NG-RAN 602, the hosting network broadcasts its SNPN ID == 123, with an indication that access using credentials from a CH is supported. Since the UE 601 is subscribed to SNPN 1, and SNPN 123 is included as a preferred SNPN in the entry of "list of subscriber data" for SNPN1, the UE 601 may select and attempt to access SNPN 123. Since there exist a time validity condition associated with SNPN 123, the UE 601 needs to determine whether such time validity condition is met before the access to SNPN 123. The LTE 601 checks the current time being January 4th, which is outside the time period of Jan-1st ~ Jan-3rd. As a result, the LTE 601 cannot access SNPN 123 using credentials from SNPN 1.

### Enhanced automatic SNPN selection for supporting localized services

An SNPN-enabled UE supports to access SNPN (in the SNPN access mode). When a UE is configured to operate in the SNPN access mode, it only selects and registers with SNPNs. Moreover, when a LTE is configured to operate in the SNPN access mode, the LTE does not perform normal PLMN selection procedures. There are two SNPN selection procedures, including automatic SNPN selection procedure and manual SNPN selection procedure.

Under proposed schemes in accordance with the present invention, the automatic SNPN selection is enhanced/adapted in which an order for SNPN selection is provided with considerations of validity information (configured for localized services) and UE/NW capability regarding the support of access using credentials from a CH. Accordingly, by applying the schemes of the present invention, a UE is able to select and attempt registration on an SNPN providing access for localized services.

For automatic network selection, if the UE supports to access an SNPN providing access for localized services and the localized services access mode is enabled (i.e., the end user enables to access localized services), the UE selects and attempts registration on available SNPN in the following order: (a) if the UE supports access to an SNPN using credentials from a CH, then the UE continues by selecting and attempting registration on available and allowable SNPNs, which broadcast the indication that access using credentials from a CH is supported, in the following order: (i) (if there is a stored registered SNPN which is a hosting network) the SNPN as hosting network (i.e., the SNPN with the validity information) that the UE was last registered with (if the validity information is met) or the SNPN's equivalent SNPN(s) (if available and the validity information of the SNPN that the UE was last registered with is met); (ii) SNPNs with validity information in the CH-controlled prioritized list of preferred SNPNs (e.g., SNPNs in the CH-controlled prioritized list of preferred SNPNs for accessing localized services) (in priority order) if the validity information is available and is met (if more than one SNPN with validity information that is met from SNPNs with validity information contained in the CH-controlled prioritized list of preferred SNPNs is available); (iii) SNPNs, which additionally broadcast a GIN with validity information contained in the CH-controlled prioritized list of preferred GINs (e.g., a GIN contained in the CH-controlled prioritized list of preferred GINs for accessing localized services) (in priority order) if validity information is available and is met (if more than one SNPN with validity information that is met from SNPNs, which additionally broadcast a GIN with validity information contained in the CH-controlled prioritized list of preferred GINs, is available); (b) (if there is a stored registered SNPN which is a non-hosting network) the SNPN as non-hosting network (i.e., the SNPN without validity information) that the UE was last registered with (if available) or the SNPN's equivalent SNPN(s) (if available); (c) the subscribed SNPN which is identified by the PLMN ID and NID for which the UE has SUPI and credentials (if the subscribed SNPN is available); (d) the available and allowable SNPNs which broadcast the indication that access using credentials from a CH is supported in the following order: (i) SNPNs in the user-controlled prioritized list of preferred SNPNs (in priority order) (if more than one SNPN in the user-controlled prioritized list of preferred SNPNs is available); (ii) SNPNs in the CH-controlled prioritized list of preferred SNPNs (in priority order) (if more than one SNPN in the CH-controlled prioritized list of preferred SNPNs is available); (iii) SNPNs, which additionally broadcast a GIN contained in the CH-controlled prioritized list of preferred GINs (in priority order) (if more than one SNPN among SNPNs, which additionally broadcast a GIN contained in the CH-controlled prioritized list of preferred GINs, is available); (iv) SNPNs, which additionally broadcast an indication that the SNPN allows registration attempts from LTEs that are not explicitly configured to select the SNPN, i.e., the broadcasted NID or GIN is not present in the CH-controlled prioritized lists of preferred SNPNs/GINs, nor in the CH-controlled prioritized lists of preferred SNPNs/GINs for accessing Localized Services in the UE (if more than one SNPN among SNPNs, which additionally broadcast an indication that the SNPN allows registration attempts from UEs that are not explicitly configured to select the SNPN, is available).

Otherwise, if the UE does not support to access an SNPN as hosting network (i.e., the UE does not support to access an SNPN providing access for localized services) or the localized services access mode is not enabled (i.e., the end user does not enable to access the localized services), the UE selects and attempts registration on available and allowable SNPNs in the following order: (1) (if there is a stored registered SNPN which is a non-hosting network) the SNPN as non-hosting network (i.e., the SNPN without validity information) that the UE was last registered with (if the last registered SNPN without validity information is available) or the SNPN's equivalent SNPN(s) (if available); (2) the subscribed SNPN which is identified by the PLMN ID and NID for which the UE has SUPI and credentials (if the subscribed SNPN is available); (3) if the UEs supports access to an SNPN using credentials from a CH, then the UE continues by selecting and attempting registration on available and allowable SNPNs, which broadcast the indication that access using credentials from a CH is supported, in the following order: (i) SNPNs in the user-controlled prioritized list of preferred SNPNs (in priority order) (if more than one SNPN in the user-controlled prioritized list of preferred SNPNs is available); (ii) SNPNs (without validity information) in the CH-controlled prioritized list of preferred SNPNs (in priority order) (if more than one SNPN in the CH-controlled prioritized list of preferred SNPNs is available); (iii) SNPNs, which additionally broadcast a GIN (without validity information) contained in the CH-controlled prioritized list of preferred GINs (in priority order) (if more than one SNPN among SNPNs, which additionally broadcast a GIN contained in the CH-controlled prioritized list of preferred GINs, is available); (iv) SNPNs, which additionally broadcast an indication that the SNPN allows registration attempts from LTEs that are not explicitly configured to select the SNPN, i.e., the broadcasted NID or GIN is not present in the CH-controlled prioritized lists of preferred SNPNs/GINs in the UE (if more than one SNPN among SNPNs, which additionally broadcast an indication that the SNPN allows registration attempts from UEs that are not explicitly configured to select the SNPN, is available).

### Illustrative Implementations

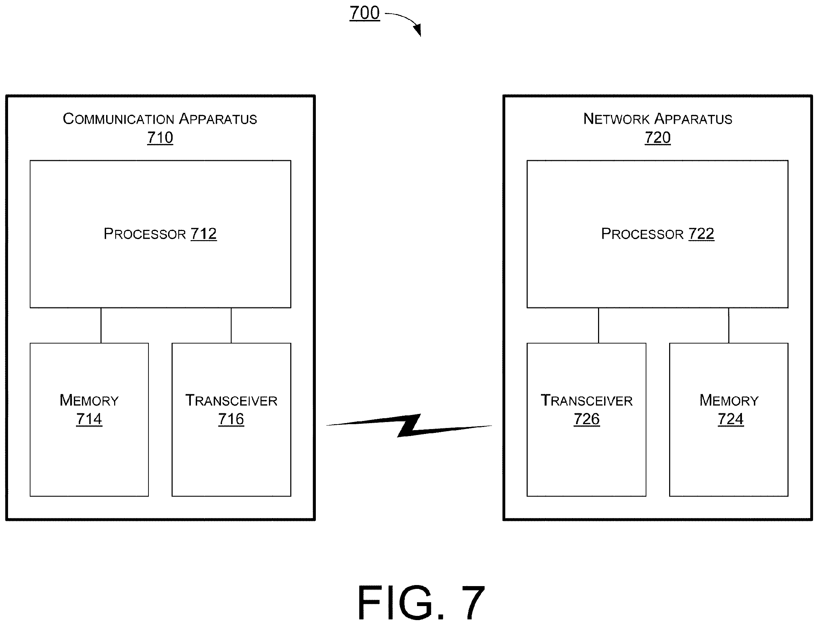

FIG. 7 illustrates an example communication system 700 having an example communication apparatus 710 and an example network apparatus 720 in accordance with an implementation of the present invention. Each of communication apparatus 710 and network apparatus 720 may perform various functions to implement schemes, techniques, processes and methods described herein pertaining to enhancements on SNPN selection for supporting localized services, including scenarios/schemes described above as well as process 800 described below.

Communication apparatus 710 may be a part of an electronic apparatus, which may be a UE such as a portable or mobile apparatus, a wearable apparatus, a wireless communication apparatus or a computing apparatus. For instance, communication apparatus 710 may be implemented in a smartphone, a smartwatch, a personal digital assistant, a digital camera, or a computing equipment such as a tablet computer, a laptop computer or a notebook computer. Communication apparatus 710 may also be a part of a machine type apparatus, which may be an IoT, NB-IoT, or IIoT apparatus such as an immobile or a stationary apparatus, a home apparatus, a wire communication apparatus or a computing apparatus. For instance, communication apparatus 710 may be implemented in a smart thermostat, a smart fridge, a smart door lock, a wireless speaker or a home control center. Alternatively, communication apparatus 710 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 710 may include at least some of those components shown in FIG. 7 such as a processor 712, for example. Communication apparatus 710 may further include one or more other components not pertinent to the proposed scheme of the present invention (e.g., internal power supply, display device and/or user interface device), and, thus, such component(s) of communication apparatus 710 are neither shown in FIG. 7 nor described below in the interest of simplicity and brevity.

Network apparatus 720 may be a part of an electronic apparatus, which may be a network node such as a BS, a small cell, a router or a gateway. For instance, network apparatus 720 may be implemented in an eNodeB in an LTE, LTE-Advanced or LTE-Advanced Pro network or in a gNB in a 5G, NR, IoT, NB-IoT or IIoT network. More specifically, network apparatus 720 may belong to part of an RAN of an SNPN. Alternatively, network apparatus 720 may be implemented in the form of one or more IC chips such as, for example and without limitation, one or more single-core processors, one or more multi-core processors, or one or more RISC or CISC processors. Network apparatus 720 may include at least some of those components shown in FIG. 7 such as a processor 722, for example. Network apparatus 720 may further include one or more other components not pertinent to the proposed scheme of the present invention (e.g., internal power supply, display device and/or user interface device), and, thus, such component(s) of network apparatus 720 are neither shown in FIG. 7 nor described below in the interest of simplicity and brevity.

In one aspect, each of processor 712 and processor 722 may be implemented in the form of one or more single-core processors, one or more multi-core processors, or one or more CISC processors. That is, even though a singular term "a processor" is used herein to refer to processor 712 and processor 722, each of processor 712 and processor 722 may include multiple processors in some implementations and a single processor in other implementations in accordance with the present invention. In another aspect, each of processor 712 and processor 722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present invention. In other words, in at least some implementations, each of processor 712 and processor 722 is a special-purpose machine specifically designed, arranged and configured to perform specific tasks including enhancements on automatic SNPN selection for supporting localized services in a device (e.g., as represented by communication apparatus 710) and a network (e.g., as represented by network apparatus 720) in accordance with various implementations of the present invention.

In some implementations, communication apparatus 710 may also include a transceiver 716 coupled to processor 712 and capable of wirelessly transmitting and receiving data. In some implementations, communication apparatus 710 may further include a memory 714 coupled to processor 712 and capable of being accessed by processor 712 and storing data (e.g., the ID(s) of the last registered SNPN, the equivalent SNPN(s), the CH-controlled prioritized list of preferred SNPNs (for accessing localized services), and/or CH-controlled prioritized list of preferred GINs (for accessing localized services)) therein. In some implementations, network apparatus 720 may also include a transceiver 726 coupled to processor 722 and capable of wirelessly transmitting and receiving data. In some implementations, network apparatus 720 may further include a memory 724 coupled to processor 722 and capable of being accessed by processor 722 and storing data therein. Accordingly, communication apparatus 710 and network apparatus 720 may wirelessly communicate with each other via transceiver 716 and transceiver 726, respectively. To aid better understanding, the following description of the operations, functionalities and capabilities of each of communication apparatus 710 and network apparatus 720 is provided in the context of a mobile communication environment in which communication apparatus 710 is implemented in or as a communication apparatus or a LTE and network apparatus 720 is implemented in or as a network node of a communication network.

According to certain proposed schemes of the present invention, processor 712 may determine whether communication apparatus 710 supports accessing an SNPN providing access for localized services and a user enables to access localized services. Then, responsive to determining that communication apparatus 710 supports accessing an SNPN providing access for localized services and the user enables to access localized services, processor 712 may perform operations including: selecting an available SNPN with validity information (e.g., from UE configuration and subscription information provided by the home network, such as a subscribed SNPN, a PLMN, or a CH) in an event that both communication apparatus 710 and the selected SNPN support access using credentials from a CH and the validity information is met, and attempting, via transceiver 716, a registration on the selected SNPN.

In some implementations, the selecting of an available SNPN with validity information may be performed in the following order: (i) selecting a last registered SNPN with validity information that is met or an available equivalent SNPN of the last registered SNPN; (ii) selecting an SNPN with validity information that is met from available SNPNs with validity information contained in a list of preferred SNPNs (e.g., from LTE configuration and subscription information) based on the priority order of the list of preferred SNPNs; or (iii) selecting an SNPN with validity information that is met from available SNPNs (e.g., from LTE configuration and subscription information), each of which broadcasts a GIN with validity information contained in a list of preferred GINs, based on the priority order of the list of preferred GINs.

In some implementations, processor 712, responsive to determining that communication apparatus 710 supports accessing an SNPN providing access for localized services and the user enables to access localized services, may further perform operations including: selecting an available last registered SNPN without validity information or an available equivalent SNPN in an event that the selecting of an available SNPN with validity information fails.

In some implementations, processor 712, responsive to determining that communication apparatus 710 supports accessing an SNPN providing access for localized services and the user enables to access localized services, may further perform operations including: selecting an available subscribed SNPN that is identified by a PLMN ID and a NID for which the apparatus has a SUPI and credentials, in an event that the selecting of an available last registered SNPN without validity information or an available equivalent SNPN fails.

In some implementations, processor 712, responsive to determining that communication apparatus 710 supports accessing an SNPN providing access for localized services and the user enables to access localized services, may further perform operations including: selecting an available SNPN which broadcasts an indication that access using credentials from a CH is supported, in an event that the selecting of an available subscribed SNPN fails. The SNPN is selected in the following order: (i) an available SNPN in a user-controlled prioritized list of preferred SNPNs, wherein the selecting is based on a priority order of the user-controlled prioritized list of preferred SNPNs; (ii) an available SNPN in a CH-controlled prioritized list of preferred SNPNs, wherein the selecting is based on a priority order of the CH-controlled prioritized list of preferred SNPNs; (iii) an available SNPN among SNPNs, each of which broadcasts a GIN contained in a CH-controlled prioritized list of preferred GINs, wherein the selecting is based on a priority order of the CH-controlled prioritized list of preferred GINs; or (iv) an available SNPN which broadcasts an indication that the SNPN allows registration attempts from UEs that are not configured to select the SNPN.

In some implementations, processor 712, responsive to determining that communication apparatus 710 does not support accessing an SNPN providing access for localized services or the user does not enable to access localized services, may further perform operations including: selecting an available SNPN without validity information and attempting, via transceiver 716, a registration on the selected SNPN.

In some implementations, the selecting of an available SNPN without validity information may be performed in the following order: (i) selecting an available last registered SNPN without validity information or an available equivalent SNPN; or (ii) selecting an available subscribed SNPN that is identified by a PLMN ID and a NID for which the apparatus has a SUPI and credentials.

In some implementations, in an event that the selecting of an available last registered SNPN without validity information, an available equivalent SNPN, or an available subscribed SNPN fails and both communication apparatus 710 and the selected SNPN support access using credentials from a CH, the SNPN may be selected in the following order: (i) an available SNPN in a user-controlled prioritized list of preferred SNPNs, wherein the selecting is based on a priority order of the user-controlled prioritized list of preferred SNPNs; (ii) an available SNPN in a CH-controlled prioritized list of preferred SNPNs, wherein the selecting is based on a priority order of the CH-controlled prioritized list of preferred SNPNs; (iii) an available SNPN among SNPNs, each of which broadcasts a GIN contained in a CH-controlled prioritized list of preferred GINs, wherein the selecting is based on a priority order of the CH-controlled prioritized list of preferred GINs; or (iv) an available SNPN which broadcasts an indication that the SNPN allows registration attempts from UEs that are not configured to select the SNPN.

In some implementations, the validity information may be met when the validity information includes at least one of time validity information and location validity information, wherein the time validity information may include at least one time period matching communication apparatus 710's current time, and the location validity information may include at least one geographical location or tracking area (of the list of tracking area identifiers (TAIs) of the serving network) matching communication apparatus 710's current location. For example, the time validity information may be mandatory and the location validity information may be optionally configured. The time validity information may be checked first to see if at least one of the one or more time periods in the time validity information matches communication apparatus 710's current time, and if so and the location validity information is configured, then the location validity information is checked to see if at least one of the one or more geographical locations or tracking areas in the location validity information matches communication apparatus 710's current location.

In some implementations, the selecting of an available SNPN with validity information may be performed for automatic network selection.

### Illustrative Processes

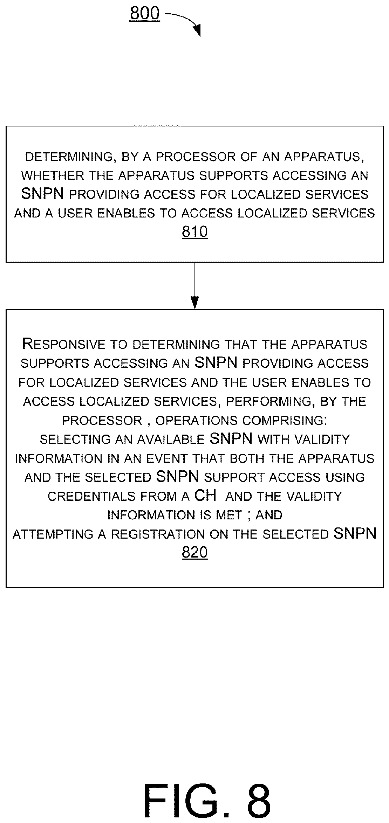

FIG. 8 illustrates an example process 800 in accordance with an implementation of the present invention. Process 800 may be an example implementation of above scenarios/schemes, whether partially or completely, with respect to enhancements on automatic SNPN selection for supporting localized services. Process 800 may represent an aspect of implementation of features of communication apparatus 710. Process 800 may include one or more operations, actions, or functions as illustrated by one or more of blocks 810 and 820. Although illustrated as discrete blocks, various blocks of process 800 may be divided into additional blocks, combined into fewer blocks, or eliminated, depending on the desired implementation. Moreover, the blocks of process 800 may be executed in the order shown in FIG. 8 or, alternatively, in a different order. Process 800 may be implemented by communication apparatus 710 or any suitable UE or machine type devices. Solely for illustrative purposes and without limitation, process 800 is described below in the context of communication apparatus 710. Process 800 may begin at block 810.

At 810, process 800 may involve processor 712 determining whether communication apparatus 710 supports accessing an SNPN providing access for localized services and a user enables to access localized services. Process 800 may proceed from 810 to 820.

At 820, process 800 may involve processor 712, responsive to determining that communication apparatus 710 supports accessing an SNPN providing access for localized services and the user enables to access localized services, performing operations including: selecting an available SNPN with validity information (e.g., from LTE configuration and subscription information provided by the home network, such as a subscribed SNPN, a PLMN, or a CH) in an event that both communication apparatus 710 and the selected SNPN support access using credentials from a CH and the validity information is met; and attempting, via transceiver 716, a registration on the selected SNPN.

In some implementations, the selecting of an available SNPN with validity information may be performed in the following order: (i) selecting a last registered SNPN with validity information that is met or an available equivalent SNPN of the last registered SNPN; (ii) selecting an SNPN with validity information that is met from available SNPNs with validity information contained in a list of preferred SNPNs (e.g., from LTE configuration and subscription information) based on a priority order of the list of preferred SNPNs; or (iii) selecting an SNPN with validity information that is met from available SNPNs (e.g., from LTE configuration and subscription information), each of which broadcasts a GIN with validity information contained in a list of preferred GINs, based on a priority order of the list of preferred GINs.

In some implementations, process 800 may further involve processor 712, responsive to determining that communication apparatus 710 supports accessing an SNPN providing access for localized services and the user enables to access localized services, performing operations including: selecting an available last registered SNPN without validity information or an available equivalent SNPN in an event that the selecting of an available SNPN with validity information fails.

In some implementations, process 800 may further involve processor 712, responsive to determining that communication apparatus 710 supports accessing an SNPN providing access for localized services and the user enables to access localized services, performing operations including: selecting an available subscribed SNPN that is identified by a PLMN ID and a NID for which the apparatus has a SUPI and credentials from LTE configuration subscription information, in an event that the selecting of an available last registered SNPN without validity information or an available equivalent SNPN fails.

In some implementations, process 800 may further involve processor 712, responsive to determining that communication apparatus 710 supports accessing an SNPN providing access for localized services and the user enables to access localized services, performing operations including: selecting an available SNPN which broadcasts an indication that access using credentials from a CH is supported, in an event that the selecting of an available subscribed SNPN fails. The SNPN is selected in the following order: (i) an available SNPN in a user-controlled prioritized list of preferred SNPNs , wherein the selecting is based on a priority order of the user-controlled prioritized list of preferred SNPNs; (ii) an available SNPN in a CH-controlled prioritized list of preferred SNPNs, wherein the selecting is based on a priority order of the CH-controlled prioritized list of preferred SNPNs; (iii) an available SNPN among SNPNs, each of which broadcasts a GIN contained in a CH-controlled prioritized list of preferred GINs, wherein the selecting is based on a priority order of the CH-controlled prioritized list of preferred GINs; or (iv) an available SNPN which broadcasts an indication that the SNPN allows registration attempts from UEs that are not configured to select the SNPN.

In some implementations, process 800 may further involve processor 712, responsive to determining that communication apparatus 710 does not support accessing an SNPN providing access for localized services or the user does not enable to access localized services, performing operations including: selecting an available SNPN without validity information and attempting, via transceiver 716, a registration on the selected SNPN.

In some implementations, the selecting of an available SNPN without validity information may be performed in the following order: (i) selecting an available last registered SNPN without validity information or an available equivalent SNPN; or (ii) selecting an available subscribed SNPN that is identified by a PLMN ID and a NID for which the apparatus has a SUPI and credentials.

In some implementations, in an event that the selecting of an available last registered SNPN without validity information, an available equivalent SNPN, or an available subscribed SNPN fails and both communication apparatus 710 and the selected SNPN support access using credentials from a CH, the SNPN may be selected in the following order: (i) an available SNPN in a user-controlled prioritized list of preferred SNPNs, wherein the selecting is based on a priority order of the user-controlled prioritized list of preferred SNPNs; (ii) an available SNPN in a CH-controlled prioritized list of preferred SNPNs, wherein the selecting is based on a priority order of the CH-controlled prioritized list of preferred SNPNs; (iii) an available SNPN among SNPNs, each of which broadcasts a GIN contained in a CH-controlled prioritized list of preferred GINs, wherein the selecting is based on a priority order of the CH-controlled prioritized list of preferred GINs; or (iv) an available SNPN which broadcasts an indication that the SNPN allows registration attempts from UEs that are not configured to select the SNPN.

In some implementations, the validity information may be met when the validity information includes at least one of time validity information and location validity information, wherein the time validity information may include at least one time period matching communication apparatus 710's current time, and the location validity information may include at least one geographical location or tracking area (of the list of TAIs of the serving network) matching communication apparatus 710's current location. For example, the time validity information may be mandatory and the location validity information may be optionally configured. The time validity information may be checked first to see if at least one of the one or more time periods in the time validity information matches communication apparatus 710's current time, and if so and the location validity information is configured, then the location validity information is checked to see if at least one of the one or more geographical locations or tracking areas in the location validity information matches communication apparatus 710's current location.

In some implementations, the selecting of an available SNPN with validity information may be performed for automatic network selection.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present invention have been described herein for purposes of illustration, and that various modifications may be made without departing from the scope and spirit of the present invention. Accordingly, the various implementations disclosed herein are not intended to be limiting, with the true scope and spirit being indicated by the following claims.

## Claims

1. A method, **characterized by**:
determining, by a processor of an apparatus, whether the apparatus supports accessing a stand-alone non-public network, SNPN, providing access for localized services and a user enables to access localized services (810);
responsive to determining that the apparatus supports accessing an SNPN providing access for localized services and the user enables to access localized services, performing, by the processor, operations comprising (820):
selecting an available SNPN with validity information in an event that both the apparatus and the selected SNPN support access using credentials from a credentials holder, CH, and the validity information is met (820); and
attempting a registration on the selected SNPN (820).

2. The method of Claim 1, **characterized in that** the selecting of an available SNPN with validity information is performed in the following order:
selecting a last registered SNPN with validity information that is met or an available equivalent SNPN of the last registered SNPN;
selecting an SNPN with validity information that is met from available SNPNs with validity information contained in a list of preferred SNPNs based on a priority order of the list of preferred SNPNs; or
selecting an SNPN with validity information that is met from available SNPNs, each of which broadcasts a group identifier for network selection, GIN, with validity information contained in a list of preferred GINs, based on a priority order of the list of preferred GINs.

3. The method of Claim 2, **characterized in that** the operations further comprise:
selecting an available last registered SNPN without validity information or an available equivalent SNPN in an event that the selecting of an available SNPN with validity information fails.

4. The method of Claim 3, **characterized in that** the operations further comprise:
selecting an available subscribed SNPN that is identified by a public land mobile network, PLMN, identifier, ID, and a network identifier, NID, for which the apparatus has a subscription permanent identifier, SUPI, and credentials, in an event that the selecting of an available last registered SNPN without validity information or an available equivalent SNPN fails.

5. The method of Claim 4, **characterized in that** the operations further comprise:
selecting an available SNPN which broadcasts an indication that access using credentials from a CH is supported, in an event that the selecting of an available subscribed SNPN fails;
wherein the SNPN is selected in the following order:
an available SNPN in a user-controlled prioritized list of preferred SNPNs, wherein the selecting is based on a priority order of the user-controlled prioritized list of preferred SNPNs;
an available SNPN in a CH-controlled prioritized list of preferred SNPNs, wherein the selecting is based on a priority order of the CH-controlled prioritized list of preferred SNPNs;
an available SNPN among SNPNs, each of which broadcasts a group identifier for network selection, GIN, contained in a CH-controlled prioritized list of preferred GINs, wherein the selecting is based on a priority order of the CH-controlled prioritized list of preferred GINs; or
an available SNPN which broadcasts an indication that the SNPN allows registration attempts from user equipments, UEs, that are not configured to select the SNPN.

6. The method of any of Claims 1-5, **characterized in that** the method further comprising:
responsive to determining that the apparatus does not support accessing an SNPN providing access for localized services or the user does not enable to access localized services, selecting, by the processor, an available SNPN without validity information and attempting a registration on the selected SNPN.

7. The method of Claim 6, **characterized in that** the selecting of an available SNPN without validity information is performed in the following order:
selecting an available last registered SNPN without validity information or an available equivalent SNPN; or
selecting an available subscribed SNPN that is identified by a public land mobile network, PLMN, identifier, ID, and a network identifier, NID, for which the apparatus has a subscription permanent identifier, SUPI, and credentials.

8. The method of Claim 7, **characterized in that,** in an event that the selecting of an available last registered SNPN without validity information, an available equivalent SNPN, or an available subscribed SNPN fails and both the apparatus and the selected SNPN support access using credentials from a CH, the SNPN is selected in the following order:
an available SNPN in a user-controlled prioritized list of preferred SNPNs, wherein the selecting is based on a priority order of the user-controlled prioritized list of preferred SNPNs;
an available SNPN in a CH-controlled prioritized list of preferred SNPNs, wherein the selecting is based on a priority order of the CH-controlled prioritized list of preferred SNPNs;
an available SNPN among SNPNs, each of which broadcasts a group identifier for network selection, GIN, contained in a CH-controlled prioritized list of preferred GINs, wherein the selecting is based on a priority order of the CH-controlled prioritized list of preferred GINs; or
an available SNPN which broadcasts an indication that the SNPN allows registration attempts from user equipments, UEs that are not configured to select the SNPN.

9. The method of any of Claims 1-8, **characterized in that** the validity information is met when the validity information comprises at least one of time validity information and location validity information, the time validity information comprises at least one time period matching the apparatus' current time, and the location validity information comprises at least one geographical location or tracking area matching the apparatus' current location.

10. The method of any of Claims 1-9, **characterized in that** the selecting of an available SNPN with validity information is performed for automatic network selection.

11. An apparatus (710), **characterized by**:
a transceiver (716) which, during operation, wirelessly communicates with one or more stand-alone non-public networks, SNPNs; and
a processor (712) communicatively coupled to the transceiver such that, during operation,
the processor performs operations comprising:
determining whether the apparatus supports accessing an SNPN providing access for localized services and a user enables to access localized services (810);
responsive to determining that the apparatus supports accessing an SNPN providing access for localized services and the user enables to access localized services, performing the following (820):
selecting an available SNPN with validity information in an event that both the apparatus and the selected SNPN support access using credentials from a credentials holder, CH, and the validity information is met (820); and
attempting, via the transceiver, a registration on the selected SNPN (820).

12. The apparatus (710) of Claim 11, **characterized in that** the selecting of an available SNPN with validity information is performed in the following order:
selecting a last registered SNPN with validity information that is met or an available equivalent SNPN of the last registered SNPN;
selecting an SNPN with validity information that is met from available SNPNs with validity information contained in a list of preferred SNPNs based on a priority order of the list of preferred SNPNs; or
selecting an SNPN with validity information that is met from available SNPNs, each of which broadcasts a group identifier for network selection, GIN, with validity information contained in a list of preferred GINs, based on a priority order of the list of preferred GINs.

13. The apparatus (710) of Claim 12, **characterized in that,** responsive to determining that the apparatus supports accessing an SNPN providing access for localized services and the user enables to access localized services, the processor further performs operations comprising:
selecting an available last registered SNPN without validity information or an available equivalent SNPN in an event that the selecting of an available SNPN with validity information fails.

14. The apparatus (710) of Claim 13, **characterized in that,** responsive to determining that the apparatus supports accessing an SNPN providing access for localized services and the user enables to access localized services, the processor further performs operations comprising: selecting an available subscribed SNPN that is identified by a public land mobile network, PLMN, identifier, ID, and a network identifier, NID, for which the apparatus has a subscription permanent identifier, SUPI, and credentials, in an event that the selecting of an available last registered SNPN without validity information or an available equivalent SNPN fails.

15. The apparatus (710) of Claim 14, **characterized in that,** responsive to determining that the apparatus supports accessing an SNPN providing access for localized services and the user enables to access localized services, the processor further performs operations comprising:
selecting an available SNPN which broadcasts an indication that access using credentials from a CH is supported, in an event that the selecting of an available subscribed SNPN fails;
wherein the SNPN is selected in the following order:
an available SNPN in a user-controlled prioritized list of preferred SNPNs, wherein the selecting is based on a priority order of the user-controlled prioritized list of preferred SNPNs;
an available SNPN in a CH-controlled prioritized list of preferred SNPNs, wherein the selecting is based on a priority order of the CH-controlled prioritized list of preferred SNPNs;
an available SNPN among SNPNs, each of which broadcasts a group identifier for network selection, GIN, contained in a CH-controlled prioritized list of preferred GINs, wherein the selecting is based on a priority order of the CH-controlled prioritized list of preferred GINs; or
an available SNPN which broadcasts an indication that the SNPN allows registration attempts from user equipments, UEs, that are not configured to select the SNPN.
